# EUROPEAN PATENT APPLICATION

(11) **EP 4 574 365 A1**
(43) Date of publication of application: **25.06.2025**
(21) Application number: 24188049.1
(22) Date of filing: 11.07.2024
(51) Int. Cl.: B26D 7/18, B26F 1/40, B26F 1/44

(54) **ELECTRODE PLATE NOTCHING APPARATUS AND ELECTRODE PLATE NOTCHING METHOD USING THE SAME**

(30) Priority: 22.12.2023 KR 20230189867
(71) Applicant: SAMSUNG SDI CO., LTD., Giheung-gu Yongin-si, Gyeonggi-do 17084 (KR)
(72) Inventor: Jang, Young Jin, 16678 Suwon-si, Gyeonggi-do (KR); Choi, Jung Hun, 16678 Suwon-si, Gyeonggi-do (KR); Jo, Jin Myung, 16678 Suwon-si, Gyeonggi-do (KR)
(74) Representative: Gulde & Partner

(57) **Abstract**

An electrode plate (10) notching apparatus and an electrode plate (10) notching method using the same are disclosed. An electrode plate (10) notching apparatus includes a first mold (100) including a punch hole (131), a second mold (200) configured to vertically move above the first mold (100) and including a punch (230), a first body (300) coupled to the first mold (100) and spaced apart from the punch hole (131), a second body (400) coupled to the second mold (200) and facing the first body (300), a scrap pusher (500) movably arranged on the second body (400) and configured to discharge a scrap from the punch hole (131), and a trigger (600) arranged on the first body (300) and configured to move the scrap pusher (500) in conjunction with vertical movement of the second body (400).

## Description

### BACKGROUND

### 1. Field

Aspects of embodiments of the present disclosure relate to an electrode plate notching apparatus and an electrode plate notching method using the same.

### 2. Discussion of Related Art

Generally, with the recent rapid spread of electronic devices that use batteries, such as mobile phones, laptop computers, and electric vehicles, the demand for secondary batteries with high energy density and capacity is rapidly increasing. Thus, research and development for improvement of the performance of lithium secondary batteries is actively underway.

A lithium secondary battery is a battery including a positive electrode and a negative electrode, each containing an active material capable of intercalation and deintercalation of lithium ions, and an electrolyte, and the lithium secondary battery produces electrical energy due to oxidation and reduction reactions when the lithium ions are intercalated and deintercalated from the positive electrode and the negative electrode.

In order to manufacture the positive electrode and the negative electrode, a process of notching a continuous electrode plate with an electrode active material applied on one side or both sides thereof at unit intervals is necessary. The notching process is generally performed by notching a portion of an electrode sheet using a puncher.

The above-described information disclosed in the technology that forms the background of the present disclosure is provided to improve understanding of the background of the present disclosure, and thus may include information that does not constitute the related art.

### SUMMARY

According to an aspect of embodiments of the present disclosure, an electrode plate notching apparatus capable of smoothly, or easily, discharging a scrap generated during notching of an electrode plate, and an electrode plate notching method using the same, are provided.

These and other aspects and features of the present disclosure will be described in or will be apparent from the following description of some embodiments of the present disclosure.

According to one or more embodiments, an electrode plate notching apparatus includes a first mold including a punch hole, a second mold configured to vertically move above the first mold and including a punch, a first body coupled to the first mold and spaced apart from the punch hole, a second body coupled to the second mold and disposed to face the first body, a scrap pusher movably installed on the second body and configured to discharge a scrap from the punch hole, and a trigger installed on the first body and configured to move the scrap pusher in conjunction with the vertical movement of the second body.

The scrap pusher may include a pusher body rotatably connected to the second body, a blade which extends from the pusher body and configured to press the scrap to the outside of the punch hole as the pusher body is rotated in a forward direction, and a restoring member connected to the pusher body and configured to rotate the pusher body in a reverse direction.

The blade may be disposed between the punch hole and the punch.

The blade may move (or may be movable) from the punch toward the punch hole as the pusher body is rotated in the forward direction.

As the pusher body is rotated in the reverse direction, the blade may be inserted into (or may be insertable in) a seating groove concavely formed in the punch.

The punch hole may be provided as (i.e., may include) a plurality of punch holes, and the blade may include a plurality of extensions disposed to face the punch holes.

The restoring member may include a restoring rod which is connected to the second body to linearly move and of which end portion comes (or is configured to come) into contact with the pusher body, and a restoring spring connected to the restoring rod and configured to press the restoring rod toward the pusher body.

The trigger may include a trigger body rotatably connected to the first body; a guide portion that is provided on the trigger body, brought (or configured to be brought) into contact with the pusher body as the second body moves downward, and configured to rotate the trigger body in the forward direction; a hook provided on the trigger body and configured to be engaged with the pusher body as the trigger body is rotated in the reverse direction after the downward movement of the second body is completed; and a pressing member connected to the trigger body and configured to rotate the trigger body in the reverse direction.

After the hook is engaged with the pusher body, the hook may rotate the pusher body in the forward direction as the second body moves upward.

The hook may be separated from the scrap pusher as the second body moves upward by a certain distance (e.g., a set distance) or greater.

The pressing member may include a pressing rod which is connected to the first body to linearly move and of which end portion is brought (or configured to be brought) into contact with a contact surface of the trigger body, and a pressing spring connected to the pressing rod and configured to press the pressing rod toward the trigger body.

The pressing rod may be in line contact with the contact surface.

The contact surface may include a protrusion which protrudes from the trigger body and may be disposed to face the end portion of the pressing rod.

A surface of the protrusion may have a curved shape, and the end portion of the pressing rod may have a planar shape.

An end surface of the pressing rod may be disposed perpendicular to a longitudinal direction of the pressing rod.

The contact surface may further include a groove concavely formed in the trigger body.

The groove may be provided as (i.e., may include) a pair of grooves, and the pair of grooves may be disposed in both (or opposite) sides of the protrusion.

A surface of the groove may have a curved shape.

According to one or more embodiments, an electrode plate notching method includes moving an electrode plate between a first mold and a second mold, moving the second mold downward, inserting a punch into a punch hole and cutting the electrode plate, moving the second mold upward, and moving, by a trigger, a scrap pusher to discharge a scrap from the punch hole.

In the cutting of the electrode plate, the trigger may be engaged with the scrap pusher, and, after the discharging of the scrap from the punch hole, the trigger may be separated from the scrap pusher.

In accordance with one or more embodiments of the present disclosure, a scrap remaining in the punch hole can be removed by simply vertically moving the second mold using the scrap pusher and the trigger without an external power device.

In accordance with one or more embodiments of the present disclosure, since an end portion of the pressing rod is in line contact with the contact surface of the trigger body, an amount of a pressing force applied to a contact surface per unit area can be relatively reduced, and wear of or damage to the contact surface can be prevented or substantially prevented.

In accordance with one or more embodiments of the present disclosure, the end portion of the pressing rod has a planar shape and a surface of the protrusion has a curved shape, such that the pressing rod and the protrusion can maintain a state of line contact regardless of a rotation angle of the trigger body.

In accordance with one or more embodiments of the present disclosure, an end surface of the pressing rod is disposed perpendicular to a longitudinal direction of the pressing rod, such that a central axis of the pressing rod may be prevented from being twisted or the pressing rod may be prevented from being bent.

However, aspects and effects obtainable through the present disclosure are not limited to the above aspects and effects, and other technical aspects and effects that are not mentioned will be clearly understood by those skilled in the art from the following description of the present disclosure.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings.
FIG. 1 is a schematic perspective view illustrating a configuration of an electrode plate notching apparatus according to an embodiment of the present disclosure;
FIG. 2 is a schematic cross-sectional perspective view illustrating the configuration of the electrode plate notching apparatus according to an embodiment of the present disclosure;
FIG. 3 is a schematic cross-sectional view illustrating the configuration of the electrode plate notching apparatus according to an embodiment of the present disclosure;
FIGS. 4 and 5 are schematic plan views illustrating the configuration of the electrode plate notching apparatus according to an embodiment of the present disclosure;
FIG. 6 is a schematic perspective view illustrating configurations of a first body, a second body, a scrap pusher, and a trigger according to an embodiment of the present disclosure;
FIG. 7 is a bottom perspective view illustrating the configurations of the first body, the second body, the scrap pusher, and the trigger according to an embodiment of the present disclosure in a different direction from FIG. 6;
FIG. 8 is a schematic view illustrating the configuration of the scrap pusher according to an embodiment of the present disclosure;
FIG. 9 is a schematic perspective view illustrating the configuration of the trigger according to an embodiment of the present disclosure;
FIG. 10 is a schematic cross-sectional view illustrating the configuration of the trigger according to an embodiment of the present disclosure;
FIG. 11 is a schematic flowchart illustrating a sequence of an electrode plate notching method according to an embodiment of the present disclosure; and
FIGS. 12 to 17 are schematic cross-sectional views illustrating an electrode plate notching process according to an embodiment of the present disclosure.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

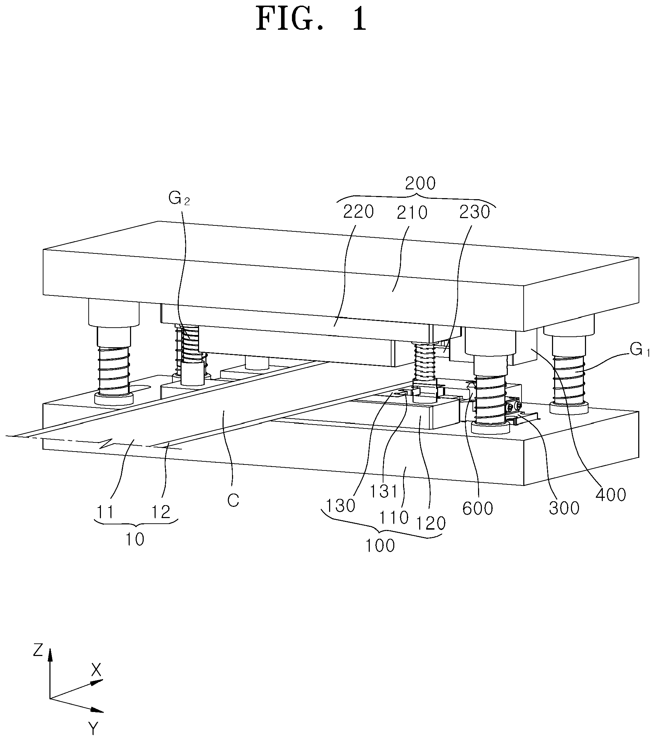

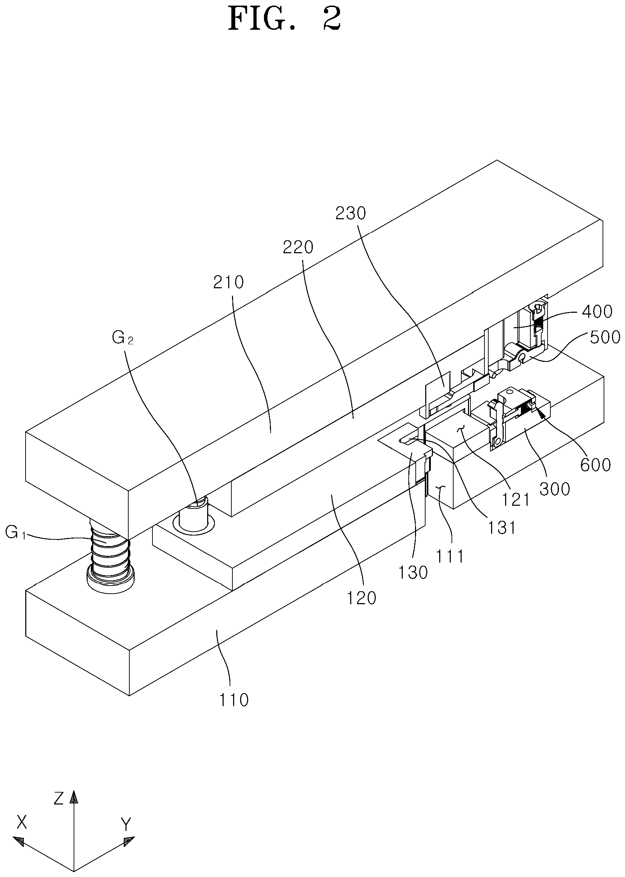

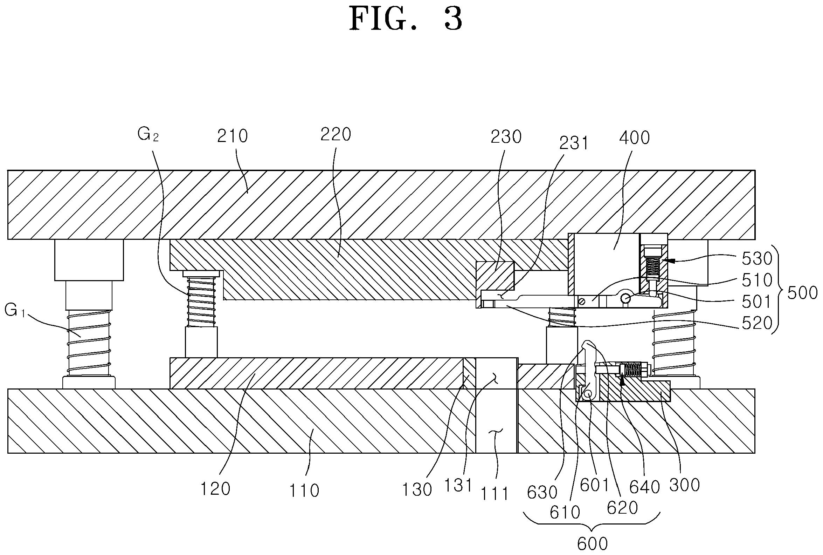

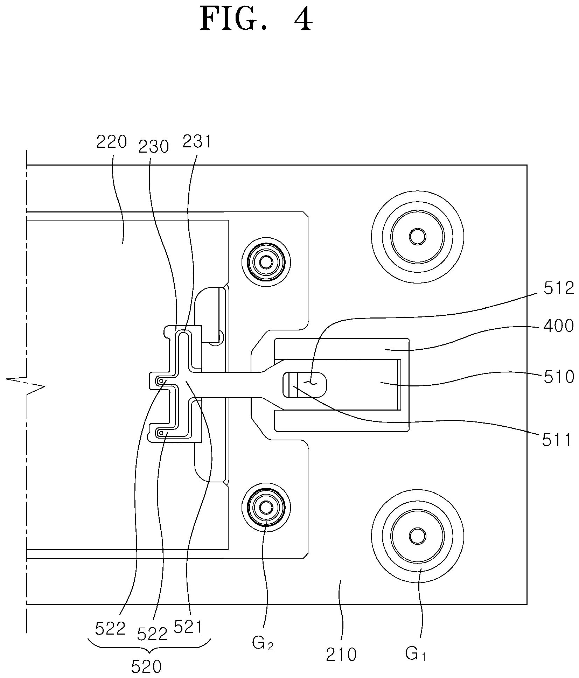

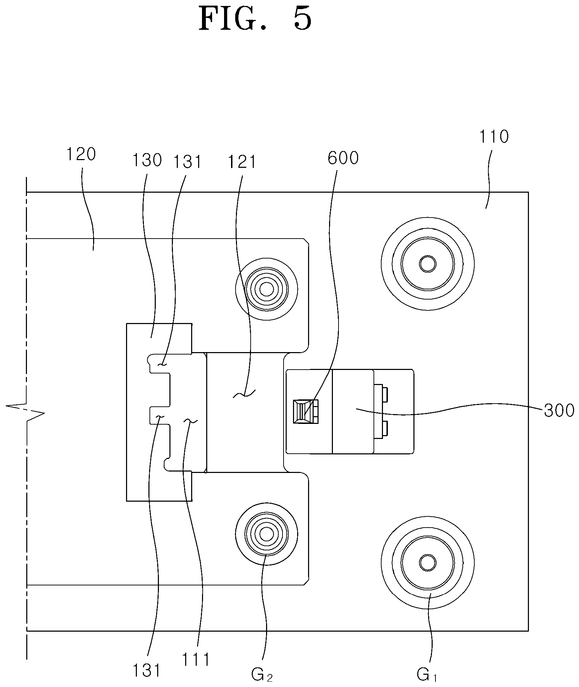

FIG. 1 is a schematic perspective view illustrating a configuration of an electrode plate notching apparatus according to an embodiment of the present disclosure; FIG. 2 is a schematic cross-sectional perspective view illustrating the configuration of the electrode plate notching apparatus according to an embodiment of the present disclosure; FIG. 3 is a schematic cross-sectional view illustrating the configuration of the electrode plate notching apparatus according to an embodiment of the present disclosure; and FIGS. 4 and 5 are schematic plan views illustrating the configuration of the electrode plate notching apparatus according to an embodiment of the present disclosure.

Referring to FIGS. 1 to 5, an electrode plate notching apparatus according to an embodiment includes a first mold 100, a second mold 200, a first body 300, a second body 400, a scrap pusher 500, and a trigger 600.

The first mold 100 forms a lower exterior of the electrode plate notching apparatus and may support the first body 300 which will be described below.

The first mold 100 may include a first base 110, a first holder 120, and a die 130.

In an embodiment, the first base 110 may be formed to have a rigid body shape with a substantially quadrangular cross-section. The first base 110 may be fixed to the ground or a separate structure (not shown) through any of various coupling methods, such as any of welding, bolting, and fit coupling methods. However, a specific shape of the first base 110 is not limited to the shape shown in FIGS. 1 to 5, and a design change to any of various shapes is possible.

A discharge hole 111 passing through upper and lower surfaces of the first base 110 may be formed in the first base 110.

The first holder 120 may be seated on the first base 110. A cross-sectional area of the first holder 120 may be formed to be smaller than a cross-sectional area of the first base 110. The first holder 120 may be fixed to the first base 110 through any of various coupling methods such as welding, bolting, and fit coupling methods. An upper surface of the first holder 120 may have a flat shape parallel to an X-Y plane based on FIG. 1. However, a specific shape of the first holder 120 is not limited to the shape shown in FIGS. 1 to 5, and a design change to any of various shapes is possible.

An entry hole 121 may be formed to be concavely recessed in a side surface of the first holder 120 to an inside of the first holder 120. An upper surface of the entry hole 121 is open and may be connected to a space above the first holder 120.

The first mold 100 may support an electrode plate 10 conveyed in a first direction. In an embodiment, the first direction may be any of directions parallel to an X-axis based on FIG. 1.

The electrode plate 10 may be formed to have a foil shape with a thin thickness. The electrode plate 10 may be made of a conductive material, such as copper, a copper alloy, nickel, a nickel alloy, aluminum, or an aluminum alloy. A length of the electrode plate 10 may continuously extend in the first direction. A lower surface of the electrode plate 10 may be disposed to face an upper surface of the first holder 120. The lower surface of the electrode plate 10 may be disposed to be brought into direct contact with the upper surface of the first holder 120 or may be disposed to be spaced by a distance (e.g., a predetermined distance) from the upper surface of the first holder 120.

Both, or opposite, end portions of the electrode plate 10 may be wound or unwound on a conveying roller (not shown) and may be conveyed in the first direction. In an embodiment, the electrode plate 10 may be gradationally conveyed to a certain distance (e.g., a set distance) in the first direction. For example, an operation in which the electrode plate 10 is conveyed to a certain distance (e.g., a set distance) in the first direction and then the conveying of the electrode plate 10 is stopped for a certain time (e.g., a set time) may be repeatedly performed.

The electrode plate 10 may include a first region 11 and a second region 12.

The first region 11 may be an area coated with an active material C in a region (e.g., an entire region) of the electrode plate 10. As an example, the first region 11 may be a central area coated with the active material C in a region (e.g., the entire region) of the electrode plate 10.

The active material C may be a positive electrode active material capable of reversible intercalation and deintercalation of lithium or a negative electrode active material capable of reversible intercalation and deintercalation of lithium ions. The positive electrode active material may include one or more among a composite oxide of lithium and a metal selected from cobalt, manganese, nickel, and a combination thereof. The negative electrode active material may include crystalline carbon, amorphous carbon, or a combination thereof.

The second region 12 may be an area not coated with the active material C in an area (e.g., an entire area) of the electrode plate 10. As an example, the second region 12 may be a region of an end portion of the electrode plate 10, which protrudes in a direction parallel to the second direction from the first region 11 in the region (e.g., the entire region) of the electrode plate 10. The second direction may be a direction intersecting the first direction, for example, a direction perpendicular to the first direction and a vertical direction, that is, a direction from the first region 11 toward the second region 12 among directions parallel to a Y-axis based on FIG. 1.

The die 130 may be installed on the first mold 100, and at least some regions of the die 130 may be disposed to face the second region 12. The die 130 may function as a component for determining a processing shape of the second region 12 together with a punch 230 which will be described below.

As an example, the die 130 may be disposed inside the first holder 120. An upper surface of the die 130 may be exposed to an external space of the first holder 120 through the upper surface of the first holder 120. The upper surface of the die 130 may be located on a same plane as the upper surface of the die 130. A portion of the upper surface of the die 130 may be disposed to face the first region 11 of the electrode plate 10, and a remaining portion may be disposed to face the second region 12 of the electrode plate 10. A side surface of the die 130 may be disposed to face an end surface of the entry hole 121 formed to be concavely recessed in the side surface of the first holder 120. In an embodiment, a cross-sectional shape of the die 130 may be designed variously depending on a shape of a punch hole 131, which will be described below.

The die 130 may include the punch hole 131.

The punch hole 131 may function together with the punch 230 as a component for determining a region where the second region 12 of the electrode plate 10 is cut. As an example, the punch hole 131 may be formed to have a shape of a hole passing through the die 130 vertically. The punch hole 131 may be disposed at a position facing the second region 12 of the electrode plate 10 in an area (e.g., an entire area) of the die 130. A longitudinal direction of the punch hole 131 may be disposed perpendicular to the first direction. A lower end portion of the punch hole 131 may be connected to the discharge hole 111 passing through the first base 110 vertically. An end portion of the punch hole 131 may pass through a side surface of the die 130 facing the entry hole 121 and may be connected to the entry hole 121.

The punch hole 131 may be provided as a plurality of punch holes 131. The plurality of punch holes 131 may be disposed separately from each other in the first direction.

The second mold 200 forms an upper exterior of the electrode plate notching apparatus and may support the second body 400. The second mold 200 may be installed, or arranged, to vertically move above the first mold 100.

The second mold 200 may include a second base 210, a second holder 220, and a punch 230.

In an embodiment, the second base 210 may be formed to have a rigid body shape with a substantially quadrangular cross-section. The second base 210 may be disposed above the first mold 100. In an embodiment, the second base 210 may be connected to a separate power device (not shown), such as a press or cylinder, and may be vertically moved up and down by a driving force generated from the power device.

A first guide post G₁ may be installed between the first base 110 and the second base 210 to guide the vertical movement of the second base 210. The first guide post G₁ may have a pillar shape of which a longitudinal direction extends in the vertical direction. Upper and lower end portions of the first guide post G₁ may be connected to the first base 110 and the second base 210, respectively. In an embodiment, the first guide post G₁ may have a telescopic structure of which a length is variable in conjunction with the vertical movement of the second base 210. The first guide post G₁ may be vertically separated as the second base 210 moves by a distance (e.g., a predetermined distance) upward. A spring may be installed at the first guide post G₁ to return the second base 210 to an initial position thereof when an external force applied to the second base 210 is removed.

The first guide post G₁ may be provided as plurality of first guide posts G₁. The plurality of first guide posts G₁ may be disposed at corners of the first base 110 and the second base 210.

The second holder 220 may be disposed below the second base 210 to face the first holder 120. A cross-sectional area of the second holder 220 may be formed to be smaller than a cross-sectional area of the second base 210. The second holder 220 may be fixed to the second base 210 through any of various coupling methods, such as welding, bolting, and fit coupling methods. The second holder 220 may vertically move along with the second base 210 when the second base 210 vertically moves. A lower surface of the second holder 220 may have a flat shape parallel to the X-Y plane based on FIG. 1.

A second guide post G₂ may be installed between the first holder 120 and the second holder 220 to guide the vertical movement of the second holder 220. The second guide post G₂ may have a pillar shape of which a longitudinal direction extends in the vertical direction. Upper and lower end portions of the second guide post G₂ may be connected to the first holder 120 and the second holder 220, respectively. In an embodiment, the second guide post G₂ may have a telescopic structure of which a length is variable in conjunction with the vertical movement of the second holder 220. The second guide post G₂ may be provided to be vertically separable as the second holder 220 moves by a distance (e.g., a predetermined distance) upward. A spring may be installed at the second guide post G₂ to return the second holder 220 to an initial position thereof when an external force applied to the second holder 220 is removed.

The second guide post G₂ may be provided as plurality of second guide posts G₂. The plurality of second guide posts G₂ may be disposed at corners of the first holder 120 and the second holder 220.

The punch 230 may be fixed to the second holder 220 and disposed to face the punch hole 131.

As an example, the punch 230 may be fixed to the lower surface of the second holder 220 by any of various coupling methods, such as welding, bolting, and fit coupling methods. A lower end portion of the punch 230 may protrude to a lower side of the second holder 220. A lower surface of the punch 230 may be disposed to face an upper surface of the punch hole 131.

The punch 230 may vertically move along with the second holder 220 when the second holder 220 vertically moves. As the second mold 200 moves downward, the punch 230 is inserted into the punch hole 131 and cuts the second region 12 such that an electrode tab may be formed on the electrode plate 10.

In an embodiment, a cross-sectional shape of the punch 230 may have a shape corresponding to the cross-sectional shape of punch hole 131. Thus, when the punch 230 is inserted into the punch hole 131, the punch 230 may cut the second region 12 according to the cross-sectional shape of the punch hole 131.

A seating groove 231 may be formed to be concavely recessed upward in the lower surface of the punch 230.

The first body 300 is coupled to the first mold 100 and may function as a component supporting the trigger 600 which will be described below.

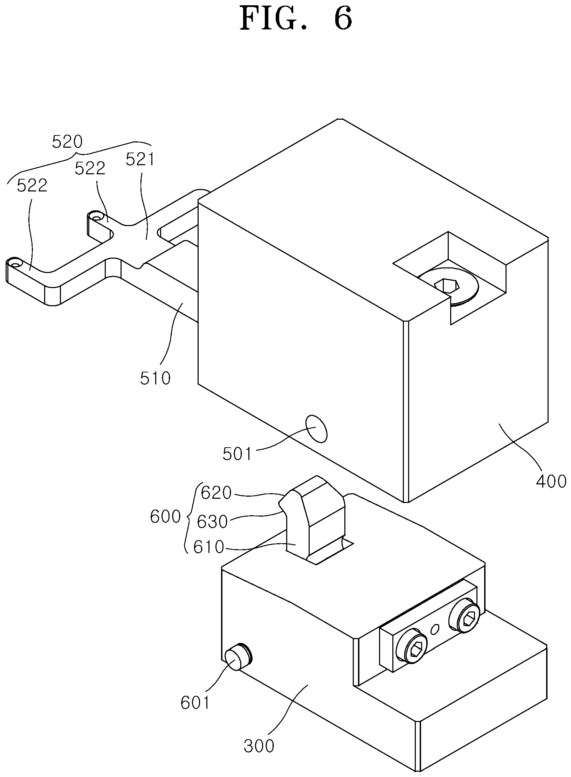

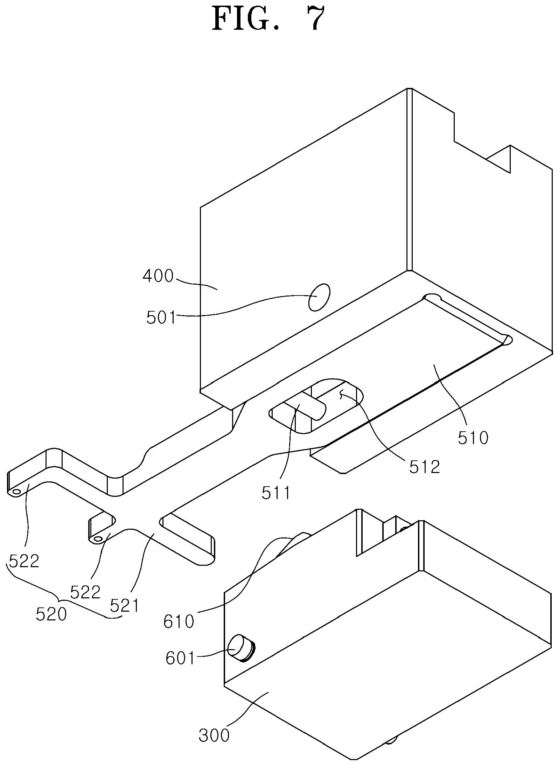

FIG. 6 is a schematic perspective view illustrating configurations of a first body, a second body, a scrap pusher, and a trigger according to an embodiment of the present disclosure; and FIG. 7 is a bottom perspective view illustrating the configurations of the first body, the second body, the scrap pusher, and the trigger according to an embodiment of the present disclosure in a different direction from FIG. 6.

Referring to FIGS. 1 to 7, in an embodiment, the first body 300 may be formed to have a substantial box shape. The first body 300 may be seated on the first base 110. A lower surface of the first body 300 may be fixed to the upper surface of the first base 110 through any of various coupling methods, such as welding, bolting, and fit coupling methods. The first body 300 may be spaced apart from the punch hole 131. In an embodiment, the first body 300 may be disposed and spaced by a distance (e.g., a predetermined distance) from the punch hole 131 through the entry hole 121 formed on the side surface of the first holder 120 in a direction perpendicular to the first direction (a Y-axis direction based on FIG. 1), thereby facing the punch hole 131.

The second body 400 is coupled to the second mold 200 and may function as a component supporting the scrap pusher 500 which will be described below. The second body 400 may vertically move along with the second mold 200 when the second mold 200 vertically moves.

As an example, the second body 400 may be formed to have a substantial box shape. An upper surface of the second body 400 may be fixed to the lower surface of the second base 210 through any of various coupling methods, such as welding, bolting, and fit coupling methods. The second body 400 may be spaced apart from the punch 230. In an embodiment, the second body 400 may be spaced by a distance (e.g., a predetermined distance) from the side surface of the second holder 220 in a direction perpendicular to the first direction (the Y-axis direction based on FIG. 1) and disposed to face the second holder 220. A lower surface of the second body 400 may be disposed to vertically face the upper surface of the first body 300.

The scrap pusher 500 may be movably installed on the second body 400. After the second region 12 of the electrode plate 10 is cut, the scrap pusher 500 may move relative to the second body 400 and discharge a scrap remaining in the punch hole 131 from the punch hole 131. Therefore, the scrap pusher 500 may prevent or substantially prevent notching quality and efficiency of the electrode plate 10 from being degraded due to a scrap remaining in the punch hole 131.

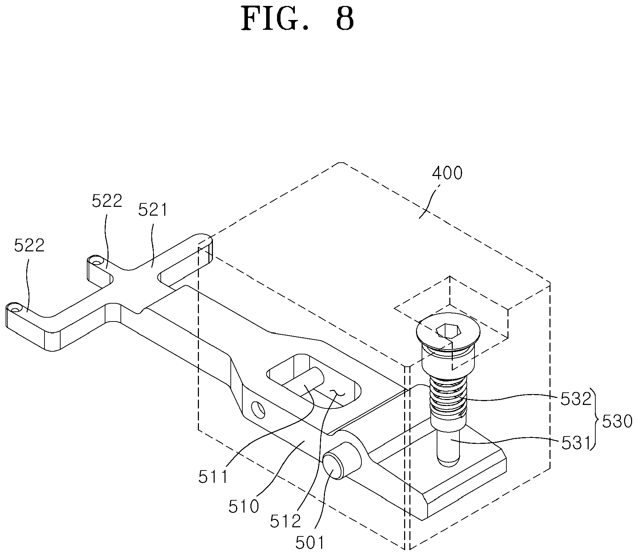

FIG. 8 is a schematic view illustrating the configuration of the scrap pusher according to an embodiment of the present disclosure.

Referring to FIGS. 1 to 8, in an embodiment, the scrap pusher 500 may include a pusher body 510, a blade 520, and a restoring member 530.

The pusher body 510 according to an embodiment may be formed to have a plate shape of which a longitudinal direction is disposed in a direction perpendicular to the first direction (the Y-axis direction based on FIG. 1). A side of the pusher body 510 may be inserted into the second body 400. Another side of the pusher body 510 may protrude outward from the second body 400 and extend toward the punch 230. A lower surface of the other side of the pusher body 510 may be disposed to face the upper surface of the entry hole 121.

The pusher body 510 may be rotatably connected to the second body 400 by a pusher shaft 501. The pusher shaft 501 may be formed to have a cylindrical bar shape to pass through the pusher body 510. Both, or opposite, end portions of the pusher shaft 501 may protrude from both sides of the pusher body 510 and may be connected to the second body 400. A longitudinal direction of the pusher shaft 501 may be disposed parallel to the first direction (the X-axis direction based on FIG. 1).

The pusher body 510 may be rotated in a forward or reverse direction about a central axis of the pusher shaft 501. Here, the pusher body 510 being rotated in the forward direction may mean that the pusher body 510 is rotated counterclockwise about the central axis of the pusher shaft 501 based on FIG. 3. In addition, the pusher body 510 being rotated in the reverse direction may mean that the pusher body 510 is rotated clockwise about the central axis of the pusher shaft 501 based on FIG. 3. The pusher body 510 may be rotated together with the pusher shaft 501, or, alternatively, the pusher body 510 may be rotated separately from the pusher shaft 501.

The pusher body 510 may include a connection rod 511 which is connected to or disconnected from the trigger 600, which will be described below, by the vertical movement of the second body 400.

The connection rod 511 according to an embodiment may be formed to have a shaft shape with a circular cross-section. The connection rod 511 may be inserted into a through-hole 512 vertically passing through the pusher body 510. A longitudinal direction of the connection rod 511 may be disposed parallel to the pusher shaft 501. In an embodiment, both, or opposite, end portions of the connection rod 511 may be integrally fixed to the pusher body 510 through any of various coupling methods, such as welding, bolting, and fit coupling methods.

The blade 520 extends from the pusher body 510 and may function as a component for removing a scrap from the punch hole 131 due to a rotational movement of the pusher body 510.

As an example, the blade 520 may be connected to an end portion of the another side of the pusher body 510 protruding outward from the second body 400. The blade 520 may be disposed between the punch hole 131 and the punch 230. When the second mold 200 vertically moves, the blade 520 may vertically move along with the second body 400 and the pusher body 510.

As the second body 400 moves downward by a certain distance (e.g., a set distance) or more, the blade 520 may be inserted into the punch hole 131 together with the punch 230. The blade 520 may have a shape capable of being smoothly, or easily, inserted into the punch hole 131. For example, the blade 520 may include a blade body 521 connected to the pusher body 510 and a plurality of extensions 522 extending from the blade body 521 and disposed to face each punch hole 131. In an embodiment, an area of each extension 522 may be smaller than an area of a corresponding punch hole 131.

In a state in which the blade 520 is inserted into the punch hole 131, as the pusher body 510 is rotated in the forward direction, the blade 520 may move in a direction from the punch 230 toward the punch hole 131. As the blade 520 moves toward the punch hole 131, the blade 520 may press a scrap to the outside of the punch hole 131, and, in an embodiment, to a lower side of the punch hole 131. Thus, a scrap may be discharged to the outside of the punch hole 131 through the discharge hole 111 connected to the lower end portion of the punch hole 131.

As the pusher body 510 is rotated in the reverse direction, the blade 520 may be inserted into the seating groove 231, which is concavely formed from the lower surface of the punch 230 inward the punch 230. Thus, when the punch 230 is inserted into the punch hole 131 and the electrode plate 10 is cut, the blade 520 does not come into direct contact with the electrode plate 10 such that cutting quality of the electrode plate 10 may be prevented or substantially prevented from being degraded. An initial position of the blade 520 described below may mean a state in which the blade 520 is inserted into the seating groove 231.

The restoring member 530 may be connected to the pusher body 510 to rotate the pusher body 510 in the reverse direction. That is, when no separate external force is applied to the pusher body 510, the restoring member 530 may function as a component for positioning the blade 520 at the initial position by suppressing a forward rotation of the pusher body 510. In addition, after the pusher body 510 is rotated in the forward direction, the restoring member 530 may function as a component for returning the blade 520 to the initial position as the external force rotating the pusher body 510 in the forward direction is removed.

The restoring member 530 may include a restoring rod 531 and a restoring spring 532.

The restoring rod 531 may be connected to the second body 400 to linearly move. As an example, the restoring rod 531 may be formed to have a substantial bar shape. The restoring rod 531 may be slidably movably connected to the second body 400 vertically. The blade 520 and the restoring rod 531 may be disposed separately from each other with the pusher shaft 501 interposed therebetween in a longitudinal direction of the pusher body 510. A lower end of the restoring rod 531 may be in contact with an upper surface of one side of the pusher body 510 inserted into the second body 400.

The restoring spring 532 may be connected to the restoring rod 531 and may press the restoring rod 531 toward the pusher body 510. As an example, the restoring spring 532 may include a coil spring which is stretchable in a longitudinal direction. The longitudinal direction of the restoring spring 532 may be disposed parallel to the longitudinal direction of the restoring rod 531, that is, the vertical direction. Both, or opposite, end portions of the restoring spring 532 may be connected to the restoring rod 531 and the second body 400, respectively. When the pusher body 510 is rotated in the forward direction, the restoring spring 532 may be compressed in the longitudinal direction to accumulate an elastic restoring force and may press a side of the pusher body 510 downward by the accumulated elastic restoring force. Thus, when no separate external force is applied to the pusher body 510, the pusher body 510 may be rotated in the reverse direction by an elastic force of the restoring spring 532. When the blade 520 is positioned at an initial position, the restoring spring 532 may be installed in a compressed state in the longitudinal direction. Thus, in an embodiment, the restoring spring 532 may always apply a rotational force to the pusher body 510 in the reverse direction.

The trigger 600 may be installed in the first body 300 and move the scrap pusher 500 in conjunction with the vertical movement of the second body 400. That is, the trigger 600 may function as a component for converting the vertical movement of the second body 400 into a motion in which the pusher body 510 is rotated in the forward direction about the pusher shaft 501. Thus, the trigger 600 may enable the scrap pusher 500 to remove a scrap remaining in the punch hole 131 during the notching process of the electrode plate 10 without a separate power device.

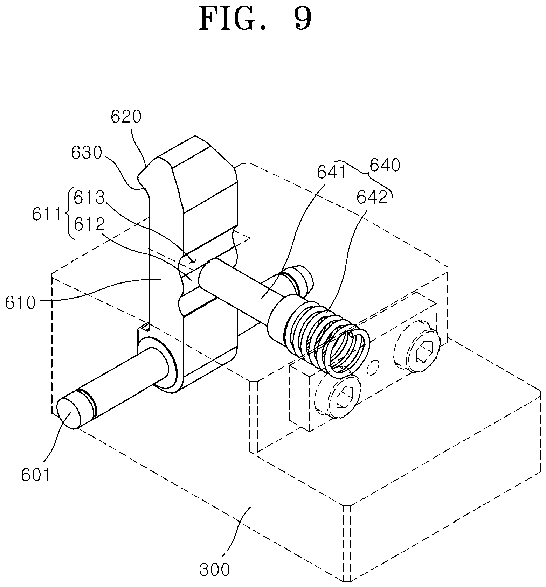

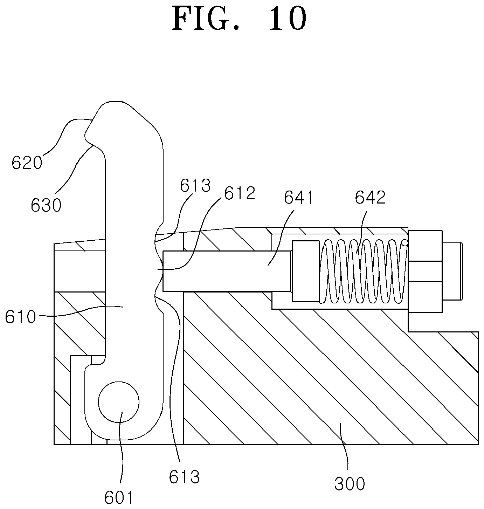

FIG. 9 is a schematic perspective view illustrating the configuration of the trigger according to an embodiment of the present disclosure; and FIG. 10 is a schematic cross-sectional view illustrating the configuration of the trigger according to an embodiment of the present disclosure.

Referring to FIGS. 1 to 10, the trigger 600 may include a trigger body 610, a guide portion 620, a hook 630, and a pressing member 640.

In an embodiment, a lower end portion of the trigger body 610 may be formed to have a shape of a bar inserted into the first body 300. An upper end portion of the trigger body 610 may pass through the upper surface of the first body 300 and protrude upward from the first body 300. The upper end portion of the trigger body 610 may be disposed to vertically face the connection rod 511 and the through-hole 512, which are formed in the pusher body 510.

The trigger body 610 may be rotatably connected to the first body 300 by a trigger shaft 601. In an embodiment, the trigger shaft 601 may be formed to have a cylindrical bar shape to pass through the trigger body 610. Both, or opposite, end portions of the trigger shaft 601 may protrude from both, or opposite, sides of the trigger body 610 and may be connected to the first body 300. In an embodiment, a longitudinal direction of the trigger shaft 601 may be disposed parallel to the first direction (the X-axis direction based on FIG. 1).

The trigger body 610 may be rotated in a forward or reverse direction about a central axis of the trigger shaft 601. Here, the trigger body 610 being rotated in the forward direction may mean that the trigger body 610 is rotated clockwise about the central axis of the trigger shaft 601 based on FIG. 3. In addition, the trigger body 610 being rotated in the reverse direction may mean that the trigger body 610 is rotated counterclockwise about the central axis of the trigger shaft 601 based on FIG. 3. The trigger body 610 may be rotated together with the trigger shaft 601, or, alternatively, the trigger body 610 may be rotated separately from the trigger shaft 601.

The guide portion 620 may be provided on the trigger body 610, and, as the second body 400 moves downward, the guide portion 620 may come into contact with the pusher body 510 to rotate the trigger body 610 in the forward direction. That is, when the second body 400 moves downward, the guide portion 620 may function as a component for adjusting an installation angle of the trigger body 610 to allow the hook 630, which will be described below, to be engaged with the pusher body 510.

The guide portion 620 according to an embodiment may be disposed on an upper end portion of the trigger body 610 facing the connection rod 511. The guide portion 620 may protrude from the upper end portion of the trigger body 610 in a direction intersecting a longitudinal direction of the trigger body 610. An end portion of the guide portion 620 may be disposed to face a space between the die 130 and the punch 230. When the second body 400 moves downward, an upper surface of the guide portion 620 may come into contact with a peripheral surface of the connection rod 511.

In an embodiment, the upper surface of the guide portion 620 may be disposed to be inclined with respect to a direction of the vertical movement of the second body 400, that is, the vertical direction. As an example, the upper surface of the guide portion 620 may be disposed to be inclined downward toward the end portion of the guide portion 620. Thus, when the guide portion 620 comes into contact with the connection rod 511, a descending force of the second body 400 may be converted into a rotational force for rotating the trigger body 610 in the forward direction by an inclination angle of the upper surface of the guide portion 620.

As the trigger body 610 is rotated at a certain angle (e.g., a set angle) or more in the forward direction, the upper surface of the guide portion 620 may be separated from the connection rod 511, and the connection rod 511 may move below the guide portion 620 by the downward movement of the second body 400.

The hook 630 is provided on the trigger body 610, and, after the downward movement of the second body 400 is completed, the trigger body 610 may be rotated in the reverse direction to be fastened to the pusher body 510. After the hook 630 is fastened to the pusher body 510, as the second body 400 moves up, the hook 630 may rotate the pusher body 510 in the forward direction. That is, the hook 630 may function as a component for converting the upward movement of the second body 400 into the forward rotation of the pusher body 510.

The hook 630 according to an embodiment may be disposed on a lower side of the guide portion 620. The hook 630 may protrude from a side surface of the trigger body 610 in a direction intersecting a longitudinal direction of the trigger body 610. An end portion of the hook 630 may be disposed to face a space between the die 130 and the punch 230.

A lower surface of the hook 630 may be disposed to be inclined with respect to a direction of the vertical movement of the second body 400, that is, the vertical direction. As an example, the lower surface of the hook 630 may be disposed to be inclined upward toward the end portion of the hook 630.

As the connection rod 511 moves below the guide portion 620 to a certain distance (e.g., a set distance) or more due to the forward rotation of the trigger body 610, the lower surface of the hook 630 may be disposed to face the peripheral surface of the connection rod 511. In this state, as the trigger body 610 is rotated by a certain angle (e.g., a set angle) or more in the reverse direction by the pressing member 640, which will be described below, the lower surface of the hook 630 may come into contact with the peripheral surface of the connection rod 511 and may be fastened to the connection rod 511. Thereafter, as the second body 400 moves upward, the hook 630 may press the connection rod 511 downward to rotate the pusher body 510 in the forward direction.

In an embodiment, the guide portion 620 and the hook 630 may be integrally formed. In an embodiment, the lower surface of the guide portion 620 and the lower surface of the hook 630 are positioned on a same plane, and the end portions of the guide portion 620 and the hook 630 may be in contact with each other on a same straight line. In an embodiment, the guide portion 620 and the hook 630 may each have a protrusion shape with a cross-sectional area gradually narrowing by extending from the upper end of the trigger body 610 toward the space between the die 130 and the punch 230.

In an embodiment, inclined angles of the upper surface of the guide portion 620 and the lower surface of the hook 630 may be the same, but, alternatively, may be formed differently.

The pressing member 640 may be connected to the trigger body 610 to rotate the trigger body 610 in the reverse direction. That is, when no separate external force is applied to the trigger body 610, the pressing member 640 may function as a component for maintaining an installation angle of the trigger body 610 at an initial angle by suppressing the forward rotation of the trigger body 610. In addition, after the trigger body 610 is rotated in the forward direction by the guide portion 620, the pressing member 640 may function as a component for bringing the hook 630 into close contact with the connection rod 511 by forcibly rotating the trigger body 610 in the reverse direction. Thus, when the second body 400 moves upward, the pressing member 640 may prevent or substantially prevent a phenomenon in which the pusher body 510 is not rotated smoothly because an engagement between the hook 630 and the connection rod 511 is unintentionally released.

The pressing member 640 may include a pressing rod 641 and a pressing spring 642.

The pressing rod 641 may be connected to the first body 300 to linearly move. As an example, the pressing rod 641 may be formed to have a substantial bar shape. The pressing rod 641 may be slidably movably connected to the first body 300 in a direction intersecting the first direction.

An end portion of the pressing rod 641 may come into contact with a contact surface 611 of the trigger body 610. The contact surface 611 may be disposed on a side of the trigger body 610 (e.g., a right surface based on FIG. 10) positioned on an opposite side of the guide portion 620 and the hook 630 of both surfaces of the trigger body 610 parallel to the first direction. The pressing rod 641 may rotate the trigger body 610 in the reverse direction by pressing the contact surface 611 using a pressing spring 642 which will be described below.

In an embodiment, an end portion of the pressing rod 641 may come into line contact with the contact surface 611 of the trigger body 610. Thus, a magnitude of a pressing force applied to the contact surface 611 per unit area may be reduced compared to a case in which the pressing rod 641 comes into point contact with the contact surface 611 such that wear of or damage to the contact surface 611 can be prevented or substantially prevented.

As an example, the contact surface 611 of the trigger body 610 may include a protrusion 612.

The protrusion 612 may protrude from the trigger body 610 toward an end portion of the pressing rod 641. In an embodiment, a surface of the protrusion 612 may have a curved shape. In an embodiment, as shown in FIGS. 9 and 10, the protrusion 612 may be formed to have a semicircular or arc-shaped cross-section about a central axis in a direction parallel to the first direction.

In an embodiment, the end portion of the pressing rod 641 coming into contact with the surface of the protrusion 612 may be formed to have a planar shape. Thus, a contact area between the end portion of the pressing rod 641 and the surface of the protrusion 612 may maintain a straight shape regardless of the rotation angle of the trigger body 610.

An end surface of the pressing rod 641 may be disposed perpendicular to a longitudinal direction of the pressing rod 641. Thus, a reaction force generated between the pressing rod 641 and the contact surface 611 is transmitted in a direction parallel to the longitudinal direction of the pressing rod 641 such that a phenomenon in which the central axis of the pressing rod 641 is twisted or the pressing rod 641 is bent can be prevented or substantially prevented.

In an embodiment, the contact surface 611 may further include a groove 613.

The groove 613 may have a shape of a groove formed concavely from a surface of the trigger body 610 where the protrusion 612 is formed in the trigger body 610. The groove 613 may be provided as a pair of grooves 613. The pair of grooves 613 may be spaced apart vertically with the protrusion 612 interposed therebetween. In an embodiment, the pair of grooves 613 may be symmetrically disposed on both, or opposite, sides of the protrusion 612. Thus, when the trigger body 610 is rotated, the groove 613 may prevent or substantially prevent the end portion of the pressing rod 641 from coming into contact with both sides of the protrusion 612 and prevent or substantially prevent the rotation range of the trigger body 610 from being limited.

In an embodiment, a surface of the groove 613 may have a curved shape. In an embodiment, as shown in FIGS. 9 and 10, the groove 613 may be formed to have a semicircular or arc-shaped cross section about a central axis in a direction parallel to the first direction. In an embodiment, the surface of the protrusion 612 and the surface of the groove 613 may be formed to form a wave shape in the vertical direction.

The pressing spring 642 may be connected to the pressing rod 641 and may press the pressing rod 641 toward the trigger body 610. As an example, the pressing spring 642 may include a coil spring which is stretchable in a longitudinal direction. The longitudinal direction of the pressing spring 642 may be disposed parallel to the longitudinal direction of the pressing rod 641. Both, or opposite, end portions of the pressing spring 642 may be connected to the pressing rod 641 and the first body 300, respectively. When the trigger body 610 is rotated in the forward direction, the pressing spring 642 may be compressed in the longitudinal direction to accumulate an elastic restoring force and may press the pressing rod 641 toward the trigger body 610 by the accumulated elastic restoring force. Thus, when no separate external force is applied to the trigger body 610, the trigger body 610 may be rotated in the reverse direction by an elastic force of the pressing spring 642. When the trigger body 610 is positioned at an initial position, the pressing spring 642 may be installed in a compressed state in the longitudinal direction. Thus, the pressing spring 642 may always apply a rotational force to the trigger body 610 in the reverse direction.

Herein, an electrode plate notching method according to an embodiment of the present disclosure will be described.

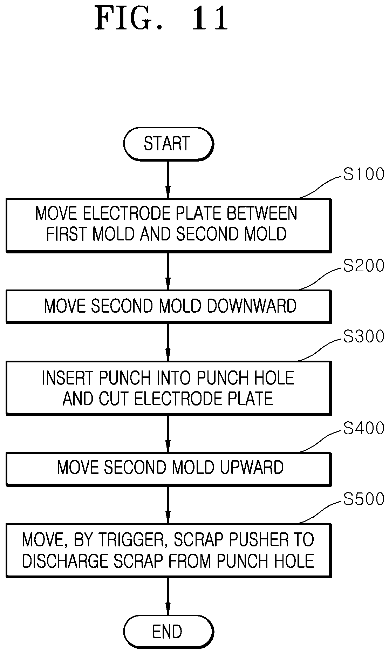

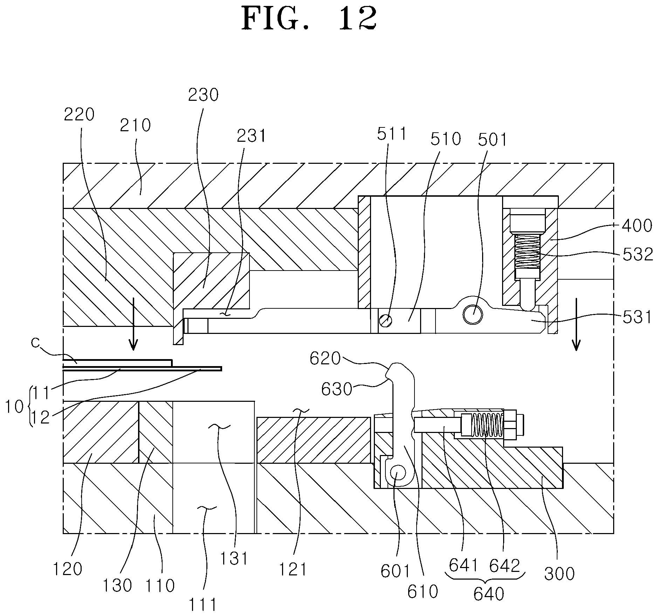

FIG. 11 is a schematic flowchart illustrating a sequence of an electrode plate notching method according to an embodiment of the present disclosure; and FIGS. 12 to 17 are schematic cross-sectional views illustrating an electrode plate notching process according to an embodiment of the present disclosure.

Referring to FIGS. 11 and 12, the electrode plate 10 is moved to a certain distance (e.g., a set distance) between the first mold 100 and the second mold 200 in the first direction (S100).

In an embodiment, operation S100 may be performed by winding the electrode plate 10 on a conveying roller (not shown).

Then, the second mold 200 is moved downward to the first mold 100 (S200).

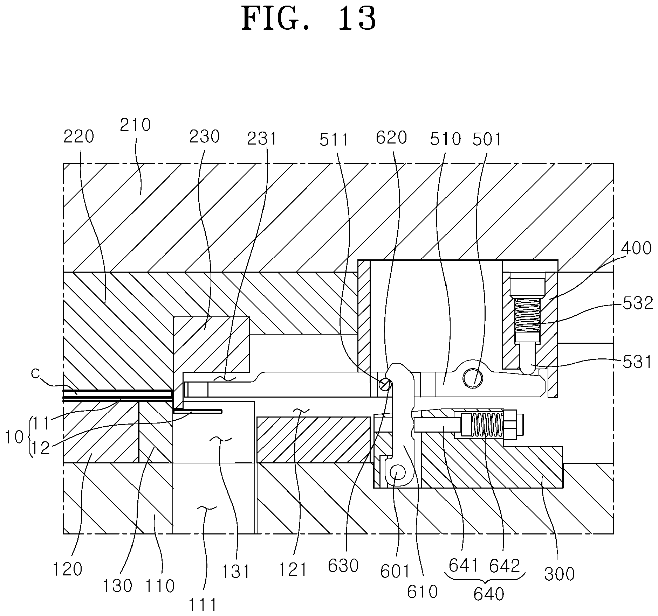

Referring to FIG. 13, as the second mold 200 moves downward, the punch 230 is inserted into the punch hole 131 and cuts the second region 12 of the electrode plate 10 (S300).

A scrap generated in the process of cutting the second region 12 of the electrode plate 10 may not be discharged to the discharge hole 111 due to friction with the die 130 and may remain inside the punch hole 131.

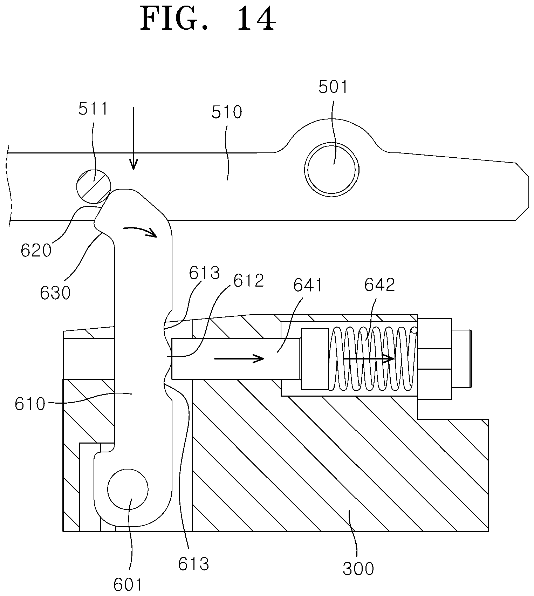

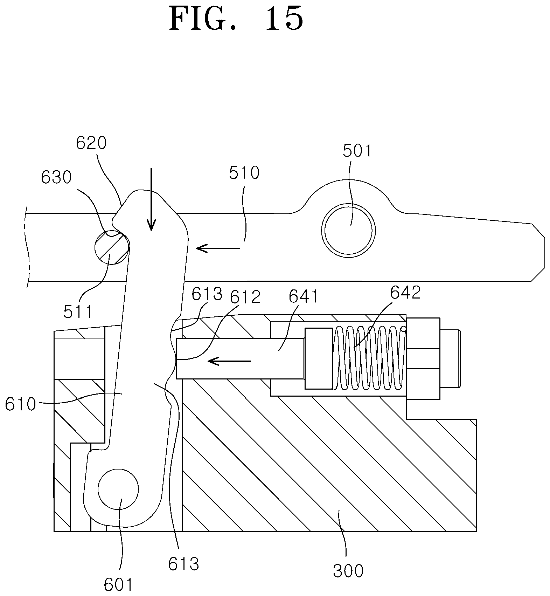

Referring to FIGS. 14 and 15, the trigger 600 may be engaged with the scrap pusher 500 in operation S300.

In an embodiment, as the second mold 200 moves downward, the second body 400 and the pusher body 510 move downward together with the second mold 200.

As the pusher body 510 moves downward by a certain distance (e.g., a set distance) or more, the upper surface of the guide portion 620 comes into contact with a lower peripheral surface of the connection rod 511.

A descending force of the second body 400 is converted into a rotational force for rotating the trigger body 610 in the forward direction (a clockwise direction based on FIG. 14) by an inclination angle of the upper surface of the guide portion 620, and the trigger body 610 is rotated in the forward direction by the rotational force.

As the trigger body 610 is rotated at a certain angle (e.g., a set angle) or more in the forward direction, the upper surface of the guide portion 620 may be separated from the connection rod 511, and the connection rod 511 is moved below the guide portion 620 by the downward movement of the second body 400.

During this process, the pressing spring 642 is compressed in the longitudinal direction and may accumulate an elastic restoring force.

As the connection rod 511 moves below the guide portion 620 by a certain distance (e.g., a set distance) or more due to the forward rotation of the trigger body 610, the lower surface of the hook 630 may be disposed to face a peripheral surface of the connection rod 511.

The pressing spring 642 presses the pressing rod 641 toward the trigger body 610 by the accumulated elastic restoring force.

The trigger body 610 is rotated in the reverse direction (a counterclockwise direction based on FIG. 15) by the pressing force applied from the pressing rod 641.

As the trigger body 610 is rotated at a set angle or more in the reverse direction, the lower surface of the hook 630 may come into contact with the upper peripheral surface of the connection rod 511 and may be fastened to the connection rod 511.

The hook 630 may remain in a state being in contact with the connection rod 511 by the pressing force applied from the pressing rod 641.

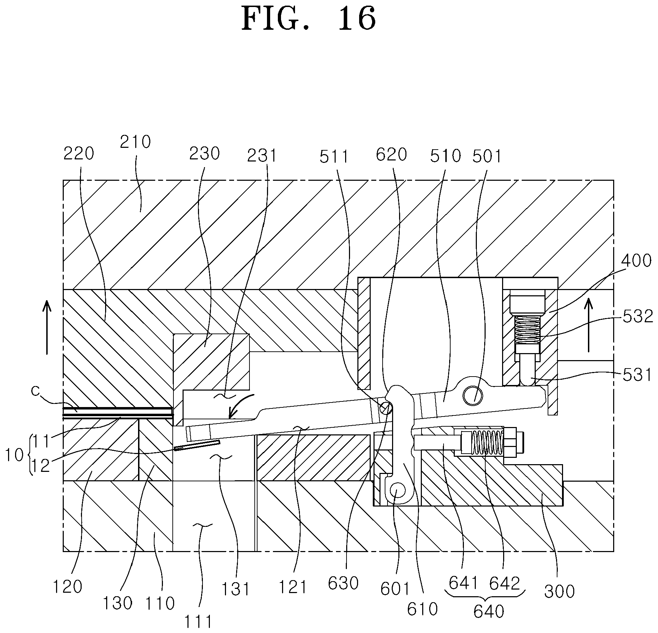

Referring to FIG. 16, after operation S300, the second mold 200 moves upward (S400), and the trigger 600 moves the scrap pusher 500 to discharge a scrap from the punch hole 131 (S500).

In an embodiment, as the second mold 200 moves upward, the second body 400 moves upward along with the second mold 200.

The second body 400 presses the hook 630 and the connection rod 511 downward, and the pusher body 510 is rotated by the pressing force in the forward direction (a counterclockwise direction based on FIG. 16) about the pusher shaft 501.

As the pusher body 510 is rotated in the forward direction, the blade 520 moves in a direction from the punch 230 toward the punch hole 131 to press the scrap to a lower side of the punch hole 131.

The scrap remaining in the punch hole 131 is discharged to the outside of the punch hole 131 through the discharge hole 111 by the pressing force applied from the blade 520.

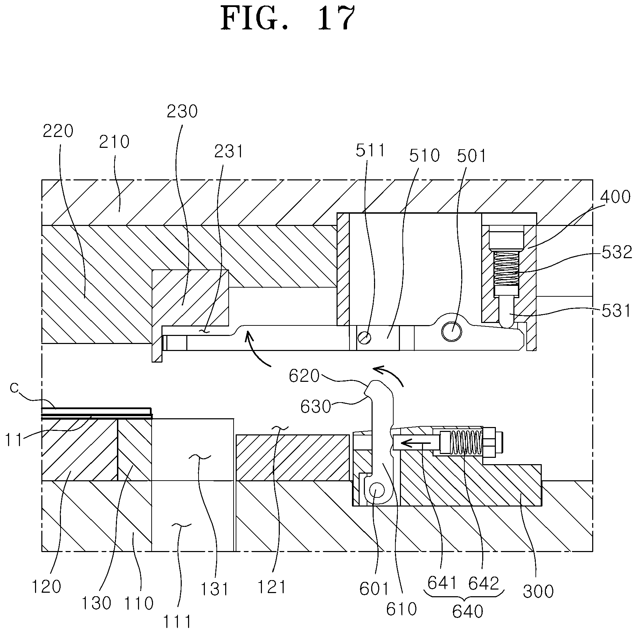

Referring to FIG. 17, after operation S500, as the second mold 200 moves upward to a certain distance (e.g., a set distance) or more, the connection rod 511 is separated from the hook 630 due to the inclination angle of the lower surface of the hook 630, and the trigger 600 is separated from the scrap pusher 500.

As the trigger 600 is separated from the scrap pusher 500, the pusher body 510 is rotated in the reverse direction (a clockwise direction based on FIG. 17) by the pressing force applied from the restoring rod 531 and returned to its initial position.

Thereafter, the above-described process may be repeatedly performed until the notching process for the electrode plate 10 is completed.

While the present disclosure has been described with reference to some embodiments shown in the drawings, these embodiments are merely illustrative and it is to be understood that various modifications and equivalent other embodiments can be derived by those skilled in the art on the basis of the embodiments. Therefore, the technical scope of the present disclosure is defined by the appended claims and equivalents thereof.

## Claims

1. An electrode plate (10) notching apparatus comprising:
a first mold (100) comprising a punch hole (131);
a second mold (200) configured to vertically move above the first mold (100) and comprising a punch (230);
a first body (300) coupled to the first mold (100) and spaced apart from the punch hole (131);
a second body (400) coupled to the second mold (200) and facing the first body (300);
a scrap pusher (500) movably arranged on the second body (400) and configured to discharge a scrap from the punch hole (131); and
a trigger (600) arranged on the first body (300) and configured to move the scrap pusher (500) in conjunction with vertical movement of the second body (400).

2. The electrode plate (10) notching apparatus as claimed in claim 1, wherein the scrap pusher (500) comprises:
a pusher body (510) rotatably connected to the second body (400);
a blade (520) extending from the pusher body (510) and configured to press the scrap to the outside of the punch hole (131) as the pusher body (510) is rotated in a forward direction; and
a restoring member (530) connected to the pusher body (510) and configured to rotate the pusher body (510) in a reverse direction.

3. The electrode plate (10) notching apparatus as claimed in claim 2, wherein the blade (520) is between the punch hole (131) and the punch (230).

4. The electrode plate (10) notching apparatus as claimed in claim 2 or 3, wherein the blade (520) is movable from the punch (230) toward the punch hole (131) as the pusher body (510) is rotated in the forward direction.

5. The electrode plate (10) notching apparatus as claimed in any one of claims 2 to 4, wherein
the punch hole (131) comprises a plurality of punch holes (131), and
the blade (520) comprises a plurality of extensions (522) facing the punch holes (131).

6. The electrode plate (10) notching apparatus as claimed in any one of claims 2 to 5, wherein the restoring member (530) comprises:
a restoring rod (531) connected to the second body (400) to linearly move and of which an end portion is configured to come into contact with the pusher body (510); and
a restoring spring (532) connected to the restoring rod (531) and configured to press the restoring rod (531) toward the pusher body (510).

7. The electrode plate (10) notching apparatus as claimed in any one of claims 2 to 6, wherein the trigger (600) comprises:
a trigger body (610) rotatably connected to the first body (300);
a guide portion (620) on the trigger body (610) and configured to be brought into contact with the pusher body (510) as the second body (400) moves downward, and configured to rotate the trigger body (610) in the forward direction;
a hook (630) on the trigger body (610) and configured to be engaged with the pusher body (510) as the trigger body (610) is rotated in the reverse direction after the downward movement of the second body (400) is completed; and
a pressing member (640) connected to the trigger body (610) and configured to rotate the trigger body (610) in the reverse direction.

8. The electrode plate (10) notching apparatus as claimed in claim 7, wherein the pressing member (640) comprises:
a pressing rod (641) connected to the first body (300) to linearly move and of which an end portion is configured to be brought into contact with a contact surface (611) of the trigger body (610); and
a pressing spring (642) connected to the pressing rod (641) and configured to press the pressing rod (641) toward the trigger body (610).

9. The electrode plate (10) notching apparatus as claimed in claim 8, wherein the pressing rod (641) is in line contact with the contact surface (611).

10. The electrode plate (10) notching apparatus as claimed in claim 8 or 9, wherein the contact surface (611) comprises a protrusion (612) protruding from the trigger body (610) and facing the end portion of the pressing rod (641).

11. The electrode plate (10) notching apparatus as claimed in claim 10, wherein a surface of the protrusion (612) has a curved shape, and the end portion of the pressing rod (641) has a planar shape.

12. The electrode plate (10) notching apparatus as claimed in any one of claims 8 to 11, wherein an end surface of the pressing rod (641) is perpendicular to a longitudinal direction of the pressing rod (641).

13. The electrode plate (10) notching apparatus as claimed in any one of claims 8 to 12, wherein the contact surface (611) further comprises a groove (613) concavely formed in the trigger body (610).

14. An electrode plate (10) notching method comprising:
moving an electrode plate (10) between a first mold (100) and a second mold (200);
moving the second mold (200) downward;
inserting a punch (230) into a punch hole (131) and cutting the electrode plate (10);
moving the second mold (200) upward; and
moving, by a trigger (600), a scrap pusher (500) to discharge a scrap from the punch hole (131).

15. The electrode plate (10) notching method as claimed in claim 14, wherein
in the cutting of the electrode plate (10), the trigger (600) is engaged with the scrap pusher (500), and
after the discharging of the scrap from the punch hole (131), the trigger (600) is separated from the scrap pusher (500).
